# EUROPÄISCHE PATENTSCHRIFT

(11) **EP 2 070 643 B1**
(45) Veröffentlichungstag und Bekanntmachung des Hinweises auf die Patenterteilung: **09.06.2010**
(21) Anmeldenummer: 08021290.5
(22) Anmeldetag: 08.12.2008
(51) Int. Cl.: B23Q 1/00

(54) **Bearbeitungseinheit für eine Fräs- und Bohrmaschine**
Processing unit for a drilling and milling machine
Unité d'usinage pour une machine de forage et de fraisage

(30) Priorität: 11.12.2007 DE 202007017251 U
(43) Veröffentlichungstag der Anmeldung: 17.06.2009
(73) Patentinhaber: DECKEL MAHO Pfronten GmbH, 87459 Pfronten (DE)
(72) Erfinder: Lechleiter, Karl, 87466 Oy-Mittelberg (DE); Gronbach, Hans, 87637 Eisenberg (DE); Geißler, Alfred, 87459 Pfronten (DE)
(74) Vertreter: Beetz & Partner

(56) Entgegenhaltungen:
- JP-A- 11 226 828
- JP-A- 60 167 728
- JP-A- 60 196 487
- JP-A- 61 121 846
- JP-A- 2001 150 258
- JP-A- 2001 198 749

## Beschreibung

Die Erfindung betrifft eine Bearbeitungseinheit für eine Fräs- und Bohrmaschine der im Oberbegriff das Patentanspruchs 1 angegebenen Gattung.

In Fräs- und Bohrmaschinen erfolgt die Versorgung des Spindelkopfes, d.h. der Arbeitsspindel und ihres Antriebs, mit Energie und Spülflüssigkeit durch betriebssichere Kabel und Schläuche, die zu einer Kabelgruppe bzw. einem Kabelbündel zusammengefasst und in der Regel von einer widerstandsfähigen flexiblen Schutzhülle umgeben sind. Diese Kabelbündel mit ihrer flexiblen Schutzhülle können sich von der Stirnwand des Maschinenständers in den Arbeitsraum außerhalb des Fräskopfes erstrecken und sind verdrehbar an eine Seitenwand des Fräskopfes angeschlossen. Der Anschluss der einzelnen Energiezuführungskabel und Druckflüssigkeitsschläuche an die jeweiligen Funktionselemente erfolgt im Inneren des Fräskopfes.

Bei einer Bearbeitungseinheit für eine Fräs- und Bohrmaschine, wie sie z.B. in der DE 101 01 038 C offenbart ist, erfolgt die Energie- und Betriebsmittelzuführung zu dem um eine horizontale Drehachse verschwenkbaren Spindelkopf bzw. zu dessen Arbeitsspindel über Kabel, Leitungen bzw. Schläuche, die zu einem Strang zusammengefasst und von einem flexiblen druckfesten Schlauchstück umgeben sind. Der aus den Kabeln und Leitungen sowie dem Schlauchstück gebildete Strang ist an einem frontseitigen Vertikalschlitten des Maschinenständers angeschlossen und erstreckt sich bogenförmig bis zu der vorderen Stirnwand des Fräskopfes, an welcher das andere Ende des Schlauchstücks über ein Verdrehelement angeschlossen ist. Da der Fräskopf um eine horizontale Achse verdreht werden kann, ist die Länge und Form des Stranges so ausgelegt, dass das Schlauchstück und auch die darin befindlichen Kabel und Leitungen den Bewegungen des Fräskopfes um die Horizontalachse weitgehend spannungsfrei folgen können. Der sich oberhalb des Arbeitsraums erstreckende Kabelabschnitt benötigt jedoch einen ausreichenden Platz innerhalb der Schutzkabine und es besteht Kollisionsgefahr bei Bearbeitung sperriger Werkstück. Ferner ist das Schlauchstück den in der Kabine befindlichen Medien ausgesetzt und kann demzufolge durch die beim Fräsbetrieb erzeugten Späne sowie ggf. auch durch andere Betriebsmittel beschädigt werden.

Aus der JP 60-167728 A ist eine Fräs- und Bohrmaschine bekannt, die eine an einem ortsfesten Maschinenständer vertikal verfahrbare Bearbeitungseinheit mit zwei horizontalen und entgegengesetzt seitlich ausgerichteten Arbeitsspindeln aufweist. Die Bearbeitungseinheit besteht aus einem am Maschinenständer in vertikalen Führungen verfahrbaren Spindelgehäuse und aus einem um eine Horizontalachse verdrehbar am Spindelgehäuse gelagerten Fräskopf, der die Form eines flachen rechteckigen Kastens hat. In diesem kastenförmigen Spindelkopf sind die beiden Arbeitsspindeln mit ihrem jeweiligen Antriebsmotor zur Drehachse versetzt angeordnet. In der vorderen Stirnwand des kastenförmigen Fräskopfes befindet sich eine Drehdurchführung, über die elektrische Kabel und Leitungen für die Energie- und Betriebsmittelzuführung in das Innere des Fräskopfes geführt werden. Die Kabel und Leitungen sind parallel nebeneinander zu einem flachen begrenzt in einer Richtung biegsamen Kabelstrang zusammengefasst, der auch als sog. Energieführungskette bezeichnet wird. Dieser flache Kabelstrang verläuft von der Maschinenrückseite über den Maschinenständer in einem großen Bogen außerhalb des Fräskopfes bis zu der in der Vorderwand des Fräskopfes ausgebildeten Drehdurchführung. Diese Drehdurchführung enthält Adapter für den Anschluss der Kabel und Leitungen. Da der flach-breite Kabelstrang mit den darin verlaufenden Kabeln und Leitungen außerhalb der Bearbeitungseinheit verläuft, wird der freie Arbeitsraum insbesondere bei der Bearbeitung von sperrigen Werkstücken durch die eine oder die andere Arbeitsspindel beschränkt und es besteht auch hier Kollisionsgefahr bei der Bearbeitung sperriger Werkstücke.

Aufgabe der Erfindung ist es, eine Bearbeitungseinheit für eine Fräs- und Bohrmaschine zu schaffen, bei welcher die Leitungen und Kabel für die Energie- und Betriebsmittelzuführung keinen zusätzlichen Raum innerhalb der Schutzkabine benötigen und gegen Beschädigungen durch Späne oder andere Betriebsmittel geschützt sind.

Diese Aufgabe wird erfindungsgemäß durch die im Patentanspruch 1 angegebenen Merkmale gelöst.

Bei der erfindungsgemäß ausgebildeten Bearbeitungseinheit sind die Kabel und Leitungen für die Energie- und Betriebsmittelzuführung in Form eines Stranges im Inneren des Spindelgehäuses angeordnet und über eine stirnseitige Drehdurchführung am freien Ende des Spindelgehäuses in den Fräskopf eingeführt. Die zu einem Bündel zusammengefassten parallel verlaufenden Kabel- und Leitungsstränge sind vom rückwärtigen Teil des Spindelgehäuses in das offene Ende eines Kanalrohrs eingeführt, das sich unter einer gewissen Neigung im hinteren Teil des Spindelgehäuses erstreckt. An dieses Kanalrohr ist eine koaxial zur Drehachse des Fräskopfes im Spindelgehäuse drehbar gelagerte Hülse angeschlossen, die über ein Getriebe von einem E-Motor verdreht werden kann, um den Spindelkopf in gewünschte horizontale, schräge und vertikale Bearbeitungspositionen auszurichten. In der formsteifen Hülse verlaufen achsparallele Längsabschnitte der Kabelstränge.

Gemäß einer zweckmäßigen Ausgestaltung der Erfindung erstrecken sich die Kabelstränge durch einen Ring in den Innenraum des Fräskopfes mit ausreichender Lose, sodass sie durch Verdrehbewegungen des Fräskopfes und der Hülse keinen Spannungen unterliegen.

Ein funktional wesentliches Merkmal der Erfindung besteht darin, dass in dem zentralen Bereich des Spindelgehäuses ein hohlzylindrischer Freiraum durch die drehangetriebene Hülse geschaffen wird, der zur Aufnahme der Kabel- und Leitungsstränge geeignet ist, und zwar ohne unerwünschte Spannungen bei Verdrehungen oder Verdrillungen der einzelnen Stränge durch die winkelbegrenzten Verdrehbewegungen des Spindelkopfes um die horizontale Längsachse.

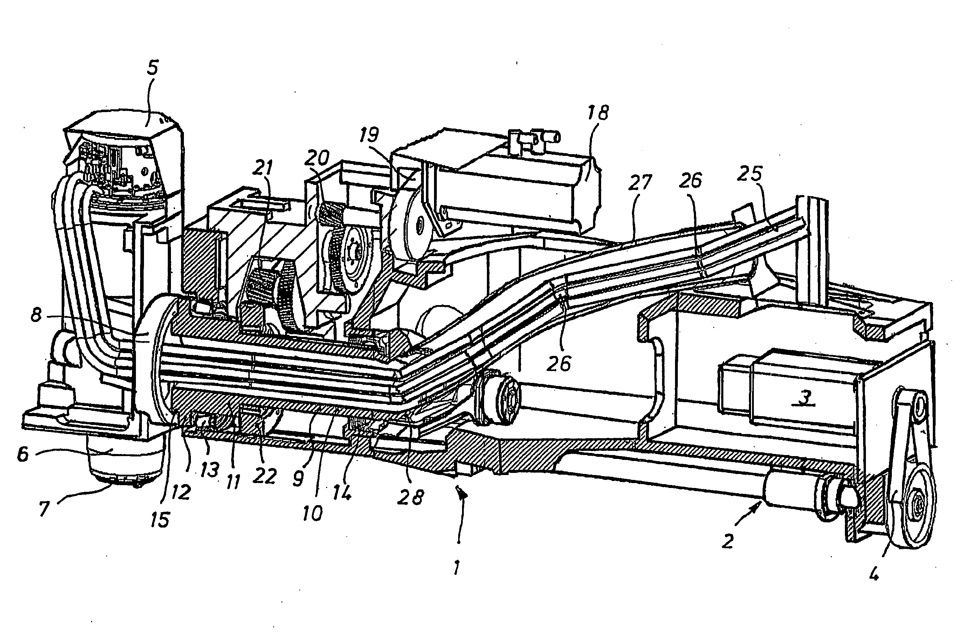

Im Folgenden wird ein Ausführungsbeispiel der Erfindung anhand der Zeichnung ausführlich beschrieben, in welcher eine Bearbeitungseinheit für eine Fräs- und Bohrmaschine im Längsschnitt schematisch dargestellt ist.

Die dargestellte Bearbeitungseinheit weist ein Spindelgehäuse 1 auf, das über - nicht dargestellte - Führungsschienen an einem Bauteil einer Fräs- und Bohrmaschine längs verschiebbar angeordnet und geführt ist. Für die Längsbewegungen der Bearbeitungseinheit dient ein Spindeltrieb 2, der hier eine sog. Kugelumlaufspindel enthält, die von einem E-Motor 3 über ein Riemengetnebe 4 angetrieben wird. An dem in der Zeichnung linken Ende des Spindelgehäuses 1 ist ein vertikaler Fräskopf 5 um eine horizontale Achse in wählbare Betriebsstellungen verdrehbar montiert. In diesem Fräskopf 5 ist eine Arbeitsspindel 6 gelagert, die von einem internen E-Motor angetrieben wird und an ihrem unteren Ende eine Werkzeugaufnahme 7 aufweist.

An der in der Zeichnung rechten Seitenwand des Fräskopfes 5 ist ein formsteifer Tragring 8 befestigt. Im vorderen Endabschnitt des Spindelgehäuses 1 ist eine langgestreckte Hülse 9 drehbar gelagert, die einen hinteren dünnwandigen Abschnitt 10 sowie einen vorderen - linksseitigen - verdickten Abschnitt 11 und einen endseitigen Radialflansch 12 aufweist. Unmittelbar neben diesem Radialflansch 12 befindet sich ein vorderes Wälzlager 13. Die Hülse 9 ist in dem vorderen Wälzlager 13 und mit ihrem in der Zeichnung rechten Ende in einem hinteren Wälzlager 14 gelagert. Stirnseitig neben dem Radialflansch 12 ist eine Ringnut 15 in der Hülse 9 ausgebildet, in welche der Ring 8 formschlüssig eingreift und dauerhaft mit der Hülse 9 befestigt ist. Zum Verdrehen der Hülse 9 zusammen mit dem Tragring 8 und dem Fräskopf 5 dient ein am verfahrbaren Spindelgehäuse 1 vorgesehenes Antriebsaggregat, das aus einem E-Motor 18, einem Riementrieb 19, einer ersten Zahnradpaarung 20 und einer zweiten Zahnradpaarung 21 besteht, wobei das Ritzel der zweiten Zahnradpaarung 21 ein auf der Hülse 9 am Übergang zu deren dickerem vorderem Teil 11 befestigtes Zahnrad 22 antreibt, wodurch die Hülse 9 in Rotation versetzt wird.

In dem Spindelgehäuse 1 der dargestellten Bearbeitungseinheit ist ein aus einem Bündel von mehreren Leitungen bzw. Kabeln bzw. Schläuchen bestehender Strang 25 für die Energie- und Betriebsmittelzuführung zu dem Fräskopf 5 bzw. dessen Arbeitsspindel 6 vorgesehen. Die Schläuche, und Kabel dieses Stranges 25 sind durch geeignete Halter 26 absatzweise in ihrer jeweiligen Winkellage gehalten, sodass unerwünschte Quer- und Verdrehbewegungen vermieden werden. In dem in der Zeichnung rechten Abschnitt verläuft der Strang 25 in einem bogenförmigen Kanalrohr 27, das innerhalb des Spindelgehäuses 1 positioniert und fixiert ist. Dieses Kanalrohr 27 kann aus Blech, ausreichend formstabilem Kunststoff oder aus einem anderen geeigneten Material gefertigt sein. Das in der Zeichnung linke Ende dieses Kanalrohrs 27 ist an eine Muffe 28 angeschlossen, an die die drehbare Hülse 9 anschließt.

Der Strang 25 erstreckt sich somit durchgehend durch das Kanalrohr 27, die Muffe 28, die Hülse 9 und den Ring 8 bis in das Innere des Fräskopfes 5. Wesentlich ist, dass die Anordnung und Positionierung der einzelnen Leitungen und Kabel insbesondere in der geradlinigen Hülse 9 und dem eine Drehdurchführung bildenden Ring 8 sowie daran anschließend in dem Fräskopf 5 so lose gestaltet ist, dass bei Verdrehbewegungen des Fräskopfes 5 um die Horizontalachse Verklemmungen und auch Verdrillungen der einzelnen Kabel relativ zueinander bzw. zu anderen Bauteilen sicher vermieden werden.

Die Erfindung ist nicht auf das dargestellte Ausführungsbeispiel beschränkt. So kann beispielsweise der Strang 25 auch in anderer Weise aus dem Spindelgehäuse, z.B. weitgehend geradlinig, herausgeführt sein. Ferner kann auch die Form, die Lagerung und auch der Drehantrieb der Hülse 9 durch andere geeignete Mittel, z.B. einen am Außenumfang der Hülse angreifenden Direktantrieb, gebildet sein. Ferner kann statt des dargestellten um die Horizontalachse verdrehbaren Fräskopfes 5 auch ein sog. Schwenk-Fräskopf eingesetzt werden, der einen ausreichend großen inneren zentralen Freiraum zur Aufnahme des Stranges 25 aufweisen müsste.

## Patentansprüche

1. Bearbeitungseinheit für eine Fräs- und Bohrmaschine mit
- einem an einem Maschinenteil längs verfahrbar gelagerten Spindelgehäuse (1),
- einem am Stirnende des Spindelgehäuses (1) um eine Drehachse verdrehbar angeordneten Fräskopf (5),
- einer im Fräskopf (5) gelagerten Arbeitsspindel (6) mit einer Werkzeugaufnahme (7) und mit einem elektrischen Antriebsmotor,
- einer Energie- und Betriebsmittelzuführung zum Fräskopf (5), die in Form eines Stranges (25) aus Leitungen und Kabeln gebildet ist, und
- einer Stirnseitige Drehdurchführung (8) zwischen dem Spindelgehäuse (1) und dem Fräskopf (5) zum Einführen der Leitungen und Kabel in den Fräskopf (5),
**dadurch gekennzeichnet, dass**
- der Strang (25) aus lose verlaufenden Leitungen und Kabeln längsgerichtet im Inneren des Spindelgehäuses (1) angeordnet ist,
- im Spindelgehäuse (1) eine formsteife Hülse (9) koaxial zur Drehachse des Fräskopfes (5) gelagert ist, in welcher sich ein vorderer Abschnitt des Stranges (25) erstreckt, und
- die formsteife Hülse (9) mit dem Fräskopf (5) verbunden ist und zu dessen Verdrehung im Spindelgehäuse (1) mit einem Drehantrieb (18-22) gekoppelt ist.

2. Bearbeitungseinheit nach Anspruch 1,
**dadurch gekennzeichnet, dass**
in einem Abschnitt des Spindelgehäuses (1) ein Kanalrohr (27) angeordnet ist, in dem Abschnitte der Kabel und Leitungen des Stranges (25) in vorgegebener Ordnung aufgenommen sind.

3. Bearbeitungseinheit nach Anspruch 2,
**dadurch gekennzeichnet, dass**
das Kanalrohr (27) an die drehbare Hülse (9) angeschlossen ist.

4. Bearbeitungseinheit nach einem der Ansprüche 1 bis 3,
**dadurch gekennzeichnet, dass**
die Leitungen und Kabel des Stranges (25) durch Halter (26) absatzweise in ihrer jeweiligen Winkellage gehalten sind.

5. Bearbeitungseinheit nach einem der vorstehenden Ansprüche,
**dadurch gekennzeichnet, dass**
der Fräskopf (5) über einen als Drehdurchführung wirksamen formsteifen Ring (8) mit dem vorderen Ende der Hülse (9) fest verbunden ist.

6. Bearbeitungseinheit nach einem der vorstehenden Ansprüche;
**dadurch gekennzeichnet, dass**
die Hülse (9) in jeweils endseitigen Wälzlagern (13, 14) im Spindelgehäuse (1) gelagert ist.

7. Bearbeitungseinheit nach einem der vorstehenden Ansprüche,
**dadurch gekennzeichnet, dass**
der der Hülse (9) zugeordnete Drehantrieb einen am Spindelgehäuse (1) montierten E-Motor (18) sowie einen Getriebezug (19-21) aufweist, dessen Ritzel mit einem auf dem Außenmantel der Hülse (9) befestigten Zahnring (22) kämmt.

8. Bearbeitungseinheit nach einem der Ansprüche 1-7,
**dadurch gekennzeichnet, dass**
der der Hülse (9) zugeordnete Drehantrieb ein am Außenumfang der Hülse (9) angreifender Direktantrieb ist.

## Claims

1. Processing unit for a milling and drilling machine having
- a spindle housing (1) which is mounted so as to be longitudinally displaceable on a machine part,
- a milling head (5) which is disposed on a front end of the spindle housing (1) so as to be able to rotate about a rotational axis,
- a working spindle (6) which is mounted in the milling head (5) and has a tool receiver (7) and an electric drive motor,
- an energy and operating medium supply to the milling head (5), which supply is formed in the shape of a strand (25) of lines and cables, and
- an end-side rotary feed-through (8) between the spindle housing (1) and the milling head (5) for introducing the lines and cables into the milling head (5), **characterised in that**
- the strand (25) of loosely running lines and cables is disposed lengthwise within the spindle housing (1),
- a dimensionally stable sleeve (9) is mounted in the spindle housing (1) coaxially with respect to the rotational axis of the milling head (5), a front portion of the strand (25) extending in this sleeve, and
- the dimensionally stable sleeve (9) is connected to the milling head (5) and is coupled to a rotary drive (18-22) for its rotation in the spindle housing (1).

2. Processing unit as claimed in Claim 1,
**characterised in that**
a channel pipe (27) is disposed in a portion of the spindle housing (1), portions of the cables and lines of the strand (25) being accommodated in the channel pipe in a predetermined order.

3. Processing unit as claimed in Claim 2,
**characterised in that**
the channel pipe (27) is connected to the rotatable sleeve (9).

4. Processing unit as claimed in any one of Claims 1 to 3,
**characterised in that**
the lines and cables of the strand (25) are intermittently held in their respective angular position by retainers (26).

5. Processing unit as claimed in any one of the preceding Claims,
**characterised in that**
the milling head (5) is fixedly connected to the front end of the sleeve (9) via a dimensionally stable ring (8) which acts as a rotary feed-through.

6. Processing unit as claimed in any one of the preceding Claims,
**characterised in that**
the sleeve (9) is mounted in the spindle housing (1) in roller bearings (13, 14) which are each on the end-side.

7. Processing unit as claimed in any one of the preceding Claims,
**characterised in that**
the rotary drive allocated to the sleeve (9) comprises an electric motor (18) mounted on the spindle housing (1) and a gear train (19-21) whose pinion meshes with a toothed ring (22) attached to the outer surface of the sleeve (9).

8. Processing unit as claimed in any one of Claims 1 to 7,
**characterised in that**
the rotary drive allocated to the sleeve (9) is a direct drive acting upon the outer periphery of the sleeve (9).

## Revendications

1. Unité d'usinage pour une machine de forage et de fraisage, comprenant :
- un carter de broche (1) positionné sur une partie de la machine de manière à pouvoir être déplacé dans une direction longitudinale,
- une tête de fraisage (5) disposée sur l'extrémité frontale du carter de broche (1) de manière à être rotative autour d'un axe de rotation,
- un arbre moteur (6) disposé dans la tête de fraisage (5) avec un porte-outils (7) et un moteur d'entraînement électrique,
- une amenée d'énergie et de moyens d'exploitation jusqu'à la tête de fraisage (5), qui prend la forme d'un écheveau (25) constitué de lignes et de câbles, et
- un joint tournant frontal (8) entre le carter de broche (1) et la tête de fraisage (5) pour l'introduction des lignes et des câbles dans la tête de fraisage (5),
**caractérisée en ce que**
- l'écheveau (25) constitué de lignes et de câbles libres est disposé dans la direction longitudinale à l'intérieur du carter de broche (1),
- une gaine (9) rigide de forme, dans laquelle s'étend une portion antérieure de l'écheveau (25), est disposée dans le carter de broche (1) dans le sens coaxial par rapport à l'axe de rotation de la tête de fraisage (5), et
- la gaine (9) rigide de forme est raccordée à la tête de fraisage (5) et est couplée à un entraînement rotatif (18-22) pour sa rotation dans le carter de broche (1).

2. Unité d'usinage selon la revendication 1,
**caractérisée en ce que**
un tube creux (27), qui accueille des sections de câbles et de lignes de l'écheveau (25) dans un agencement prédéterminé, est disposé dans une portion du carter de broche (1).

3. Unité d'usinage selon la revendication 2,
**caractérisée en ce que**
le tube creux (27) est raccordé à la gaine rotative (9).

4. Unité d'usinage selon l'une des revendications 1 à 3,
**caractérisée en ce que** les lignes et câbles de l'écheveau (25) sont maintenus à intervalles par des supports (26) en leur position angulaire respective.

5. Unité d'usinage selon l'une des revendications précédentes,
**caractérisée en ce que**
la tête de fraisage (5) est solidement raccordée à l'extrémité avant de la gaine (9) par le biais d'une bague (8) rigide de forme faisant office de joint tournant.

6. Unité d'usinage selon l'une des revendications précédentes,
**caractérisée en ce que**
la gaine (9) est disposée dans des roulements (13, 14) situés respectivement à chaque extrémité dans le carter de broche (1).

7. Unité d'usinage selon l'une des revendications précédentes,
**caractérisée en ce que**
l'entraînement rotatif affecté à la gaine (9) présente un moteur électrique (18) monté sur le carter de broche (1) ainsi qu'un train d'engrenages (19 - 21) dont le pignon tourne en prise avec une roue dentée (22) fixée sur le manteau externe de la gaine (9).

8. Unité d'usinage selon l'une des revendications 1 à 7,
**caractérisée en ce que**
l'entraînement rotatif affecté à la gaine (9) est un entraînement direct mordant sur la périphérie externe de la gaine (9).
